# EUROPÄISCHE PATENTANMELDUNG

(11) **EP 1 103 782 A2**
(43) Veröffentlichungstag der Anmeldung: **30.05.2001**
(21) Anmeldenummer: 00125081.0
(22) Anmeldetag: 17.11.2000
(51) Int. Cl.: G01B 11/00

(54) **Messverfahren zur optischen Positionsbestimmung eines Bewegungsgliedes und Sensor zur Durchführung des Verfahrens**

(30) Priorität: 24.11.1999 DE 19956557
(71) Anmelder: Mannesmann VDO AG, 60388 Frankfurt am Main (DE)
(72) Erfinder: Degen, Martin, 61352 Bad Homburg (DE)
(74) Vertreter: Klein, Thomas, Dipl.-Ing. (FH)

(57) **Zusammenfassung**

Bei einem Messverfahren zur optischen Positionsbestimmung eines Bewegungsgliedes (2) wird das von einer Lichtquelle abgestrahlte Licht in einen eine Lichtdämpfung verursachenden Lichtleiter (4, 5) eingeleitet. Mittels eines entsprechend der Position des Bewegungsgliedes (2) beweglichen Lichtauskoppelelementes (9) wird das Licht ausgekoppelt und einem Lichtdetektor zugeführt. Aus dem Verhältnis der von der Lichtquelle abgestrahlten und der von dem Lichtdetektor erfassten Lichtstärke kann die Lichtdämpfung ermittelt und so auf die Position des Bewegungsgliedes (2) geschlossen werden. Das so geschaffene Verfahren ermöglicht in einfacher Weise die genaue Positionsbestimmung unabhängig von der Art und Größe des Bewegungsbereiches. Dabei erfordert das Messverfahren lediglich einen Lichtdetektor, wobei der Sensor (1) aufgrund der unabhängigen Anordnung der elektrischen Bauteile von dem Bewegungsglied (2) auch in einem aggressiven oder störanfälligen Umfeld einsetzbar ist.

## Beschreibung

Die Erfindung betrifft ein Messverfahren zur optischen Positionsbestimmung eines Bewegungsgliedes, insbesondere in einem Kraftfahrzeug, mittels einer Lichtquelle und eines Lichtdetektors, bei dem die Charakteristik des von der Lichtquelle abgestrahlten Lichtes durch die unterschiedliche Position des Bewegungsgliedes verändert, mittels des Lichtdetektors erfasst und daraus die Position des Bewegungsgliedes errechnet wird. Weiterhin betrifft die Erfindung einen optischen Sensor zur Durchführung des Verfahrens.

Ein derartiges Messverfahren wird beispielsweise im Automobilsektor eingesetzt, um eine Verdrehung einer Lenkwelle eines Kraftfahrzeuges zu erfassen und daraus ein Torsionsmoment zu errechnen. Hierzu fällt das von der Lichtquelle abgestrahlte Licht nacheinander durch jeweils eine mit dem als Lenkwelle ausgeführten Bewegungsglied verbundene und eine mit einem Referenzpunkt verbundene Blende und wird anschließend von dem Lichtdetektor erfasst. Dabei führt ein Winkelversatz zwischen den beiden Blenden zu einer teilweisen oder vollständigen Abschirmung des Lichtkanales, der so von dem Lichtdetektor beispielsweise als Helligkeitsdifferenz erfasst wird.

Während sich das genannte Verfahren vergleichsweise gut eignet, um einen relativen Versatz zwischen dem Bewegungsglied und dem Referenzpunkt zu erkennen, hat sich bei Messungen zur Positionsbestimmung als nachteilig erwiesen, dass die Messwerte entweder ungenau sind oder aber der Sensor eine Vielzahl von Blenden erfordert. Weiterhin müssen in Abhängigkeit von dem maximal möglichen Bewegungsbereich des Bewegungsgliedes zumeist mehrere Lichtdetektoren vorgesehen werden, was zu einem hohen Herstellungsaufwand und zu einer umständlichen Handhabung führt.

Der Erfindung liegt das Problem zugrunde, ein Verfahren zur optischen Positionsbestimmung der eingangs genannten Art so zu gestalten, dass die hierbei erreichbare Genauigkeit der Messwerte wesentlich verbessert sowie die Durchführung des Verfahrens erleichtert werden kann. Weiterhin soll eine Vorrichtung zur Durchführung des Verfahrens geschaffen werden.

Das erstgenannte Problem wird erfindungsgemäß gelöst, indem das Licht in eine entsprechend der Position des Bewegungsgliedes veränderliche Messstrecke eingeleitet wird, wobei eine durch die Messstrecke verursachte Lichtdämpfung des Lichtes mittels des Lichtdetektors erfasst und aus der Lichtdämpfung mittels einer Recheneinheit auf die Position des Bewegungsgliedes geschlossen wird.

Hierdurch wird eine exakte und stufenlose Positionsbestimmung auch unter ungünstigen räumlichen Verhältnissen ermöglicht. Dabei kann die Positionsbestimmung mit lediglich einem Lichtdetektor durchgeführt werden, so dass das Messverfahren mit geringem Aufwand durchführbar ist, wobei auf zusätzliche Blenden, die in den Strahlengang des Lichtes eingreifen, verzichtet werden kann. Die Messgenauigkeit ist zugleich unabhängig von dem maximalen Bewegungsbereich des Bewegungsgliedes, so dass auch vergleichsweise große Verstellbereiche problemlos erfasst werden können. Weiterhin hat sich das Verfahren bei solchen Anwendungen bewährt, bei denen ein aggressives Umfeld den Einsatz elektrischer Bauteile ausschließt und bei denen zur Vermeidung von Verschleiß oder Einflüssen des Messverfahrens auf das Bewegungsglied einem berührungslosen Messverfahren der Vorzug zu geben ist.

Die Messstrecke könnte hierbei flexibel oder elastisch verformbar ausgeführt sein, um so eine Veränderung der Lichtdämpfung entsprechend der Position des Bewegungsgliedes zu erreichen. Eine besonders vorteilhafte Ausführungsform der Erfindung ist hingegen gegeben, wenn das Licht zunächst in einen Lichtleiter eingeleitet, dann entsprechend der Position des Bewegungsgliedes ausgekoppelt und schließlich dem Lichtdetektor zugeführt wird. Hierbei wird die Strecke, die das Licht in dem Lichtleiter zurücklegt, bevor die Auskopplung und Übertragung auf den Lichtdetektor erfolgt, durch das Bewegungsglied verändert und die hierdurch verursachte unterschiedliche Lichtdämpfung zur Positionsbestimmung herangezogen. Dadurch lässt sich auch ein vergleichsweise großer Bewegungsbereich, der beispielsweise auch einen beliebigen räumlichen Verlauf aufweisen kann, realisieren. Das Bewegungsglied kann hierzu auch derart mit dem Lichtleiter verbunden werden, dass es einen Lichtaustritt ausschließlich in seiner jeweils aktuellen Position gestattet, während der übrige Bereich des Lichtleiters abgedeckt ist und somit ein Lichtaustritt ausgeschlossen wird.

Bei Verwendung einer Lichtquelle mit einer bekannten Lichtstärke kann durch Vergleich mit der durch den Lichtdetektor erfassten Lichtstärke auf die Position des Bewegungsgliedes geschlossen werden. Eine andere besonders günstige Weiterbildung des Verfahrens ist dann gegeben, wenn zur optischen Positionsbestimmung das von der Lichtquelle abgestrahlte Licht und das von dem Lichtdetektor erfasste Licht miteinander verglichen wird und aus dem Differenzwert die Position des Bewegungsgliedes bestimmt wird. Hierdurch können unterschiedliche Lichtquellen bei dem Verfahren eingesetzt werden, deren Lichtstärke zunächst nicht bekannt sein muss. Dabei wird es auch möglich, das Licht einer fremden Lichtquelle oder auch die Umgebungshelligkeit zur Durchführung des Messverfahrens zu nutzen.

Eine besonders gut geeignete Ausgestaltung des Verfahrens ist gegeben, wenn die Lichtdämpfung aus der Abweichung der Helligkeit und des Farbspektrums des von der Lichtquelle abgestrahlten und des von dem Lichtdetektor erfassten Lichtes voneinander bestimmt wird. Hierdurch lässt sich die Genauigkeit des Messverfahrens zusätzlich verbessern, indem einerseits aus der Helligkeitsdifferenz, andererseits aus der Farbdifferenz auf die Position des Bewegungsgliedes geschlossen wird. Eine Abweichung der jeweils ermittelten Werte kann daher dem Benutzer bei einer unzulässigen Abweichung als Fehlermeldung angezeigt werden.

Das zweitgenannte Problem, die Schaffung eines optischen Sensors zur Positionsbestimmung des Bewegungsgliedes mittels der Lichtquelle und des Lichtdetektors zur Durchführung des Verfahrens, wird erfindungsgemäß durch einen die Lichtdämpfung bewirkenden, mittels der Lichtquelle beleuchtbaren Lichtleiter und ein entsprechend der Stellposition des Bewegungsgliedes bewegliches Lichtauskoppelelement zur Übertragung des Lichtes auf den Lichtdetektor gelöst.

Hierdurch wird die Positionsbestimmung des Bewegungsgliedes in einfacher Weise aus der verstärkten Dämpfung des Lichtes bei zunehmender Strecke, die das Licht bis zur Auskopplung zurücklegt, bestimmt, wobei das Lichtauskoppelelement entlang des Lichtleiters gemeinsam mit dem Bewegungsglied beweglich ist. Dabei erfordert die Anordnung auch bei einem großen Bewegungsbereich des Bewegungsgliedes lediglich einen Lichtdetektor, so dass der Sensor einfach in der Herstellung ist und einen geringen Raumbedarf hat. Weiterhin kann sowohl die Position eines translatorisch verschiebbaren als auch eines um eine Achse schwenkbaren Bewegungsgliedes problemlos erfasst werden, wobei das Bewegungsglied auch einer beliebigen, räumlichen Bewegungsbahn folgen kann.

Hierzu ist es besonders günstig, wenn der Lichtleiter zur Positionsbestimmung des um eine Achse auslenkbaren Bewegungsgliedes eine kreisring- oder bogenförmige Formgebung aufweist. Hierdurch können bereits geringe Winkelveränderungen zuverlässig erfasst werden. Das Lichtauskoppelelement ist hierzu beispielsweise ähnlich einer Zeigerfahne mittels des Bewegungsgliedes entlang des Lichtleiters beweglich, wodurch eine zuverlässige Lichtauskopplung des Lichtes in Übereinstimmung mit der Position des Bewegungsgliedes erfolgen kann. Die Lichtauskopplung kann dabei grundsätzlich an einer beliebigen Außenfläche des Lichtleiters vorgenommen werden, so dass insbesondere eine individuelle Anpassung des optischen Sensors an die jeweils vorgegebene Einbauposition problemlos möglich ist.

Eine besonders vorteilhafte Ausführungsform der Erfindung ist auch dadurch gegeben, dass das Lichtauskoppelelement zur Übertragung des Lichtes von dem ersten Lichtleiter auf einen zweiten, der Rückleitung des Lichtes zu dem Lichtdetektor dienenden Lichtleiter ausgeführt ist.

Hierdurch entsteht eine kompakte Ausführungsform des optischen Sensors, bei der insbesondere die Lichtquelle und der Lichtdetektor zentral, beispielsweise auch als eine gemeinsame Baueinheit, angeordnet werden können. Daher ist der Sensor auch bei solchen Anwendungen einsetzbar, bei denen im Bereich des Bewegungsgliedes der Einsatz elektrischer bzw. metallischer Bauteile oder Werkstoffe nicht möglich ist oder Störungen verursacht. Denkbar ist dabei auch, die Lichtquelle und den Lichtdetektor zentral anzuordnen und zusätzlich auch zur Positionsbestimmung weiterer Bewegungsglieder einzusetzen. Weiterhin kann der zweite Lichtleiter sowohl mit einer Lichtdämpfung behaftet sein und so als verlängerte Messstrecke dienen als auch weitgehend frei von Lichtverlusten ausgeführt sein.

Hierzu ist eine besonders zweckmäßige Weiterbildung der Erfindung dadurch gegeben, dass die beiden Lichtleiter eine im Wesentlichen gemeinsame Baueinheit bilden, wobei die Lichtleiter voneinander optisch getrennt angeordnet sind. Diese beispielsweise auch verformbare Baueinheit ermöglicht einen problemlosen Einsatz des optischen Sensors insbesondere auch bei bereits vorhandenen Bewegungsgliedern. Das in den ersten Lichtleiter eingekoppelte Licht wird dabei mittels des Lichtauskoppelelementes unter Umkehrung der Richtung auf den zweiten Lichtleiter übertragen und so dem Lichtdetektor zugeführt, der somit unmittelbar benachbart zu der Lichtquelle angeordnet werden kann.

Eine andere Ausführungsform der Erfindung ist dann besonders sinnvoll, wenn die Lichtleiter durch das Lichtauskoppelelement zur Bestimmung der Position des Bewegungsgliedes miteinander verbunden sind. Eine derartige Anordnung der Lichtleiter und des Lichtauskoppelelementes ermöglicht so eine einfache Erfassung von Drehmomenten, wobei die Lichtleiter beispielsweise außenseitig an einer Welle angeordnet und das Lichtauskoppelelement mit geringem Abstand zu den Lichtleitern an einer die Welle umschließende Hülse oder Lagerschale fixiert sein kann.

Dabei ist es besonders hilfreich, wenn das Lichtauskoppelelement eine Spiegelfläche hat. Hierbei wird das mittels der Lichtquelle eingekoppelte und an einer Außenfläche des Lichtleiters gleichmäßig austretende Licht von der Spiegelfläche umgelenkt und dem Lichtdetektor zugeführt. Hierzu kann das Bewegungsglied auch selbst unmittelbar mit der Spiegelfläche versehen sein.

Eine andere vorteilhafte Ausführungsform der Erfindung wird auch dadurch erreicht, dass das Lichtauskoppelelement ein Prisma hat. Das Prisma ist hierbei optimal geeignet, um das in den Lichtleiter eingekoppelte Licht im Wesentlichen verlustfrei auf einen zweiten Lichtleiter zu übertragen und so eine einfache Rückführung des gedämpften Lichtes zu erreichen.

Das mittels der Lichtquelle eingekoppelte Licht kann durch eine entsprechende Beschaffenheit der Außenfläche des Lichtleiters gleichmäßig austreten und so eine Lichtdämpfung bewirken. Eine andere besonders vorteilhafte Weiterbildung der Erfindung ist hingegen auch dadurch gegeben, dass der Lichtleiter zur Lichtdämpfung eingelagerte, eine eingeschränkte Transmission aufweisende Zusätze aufweist. Hierdurch kann unabhängig von der Formgebung des Lichtleiters eine gleichmäßige insbesondere in ihrer Stärke einstellbare Lichtdämpfung erreicht werden.

Eine andere besonders zweckmäßige Ausführungsform der Erfindung wird auch dann erreicht, wenn die Zusätze mit Farbpartikeln versehen sind. Hierdurch können fehlerhafte Messungen, beispielsweise verursacht durch Streulicht, insbesondere auch durch eine redundante Messung einerseits des durch den Lichtleiter veränderten Farbspektrums, andererseits der Helligkeitsdifferenz weitgehend ausgeschlossen werden. Zusätzlich können mögliche Messfehler sowie Beschädigungen des Sensors erkannt und beispielsweise einem Diagnosesystem zugeführt werden.

Besonders einfach ist es hingegen, wenn der Lichtleiter an zumindest einer Außenfläche eine geeignete Oberflächenbeschaffenheit aufweist, an der zur Lichtdämpfung ein Anteil des von der Lichtquelle in den Lichtleiter einstrahlenden Lichtes austritt. Hierdurch kann die Lichtdämpfung in einfacher Weise durch den Lichtverlust an der Außenfläche des Lichtleiters erfolgen, so dass auch an sich bekannte Lichtleiter eingesetzt werden können.

Das Lichtauskoppelelement kann auf die Oberfläche des Lichtleiters aufgesetzt sein. Eine andere günstige Ausgestaltung der Erfindung ist hingegen dann gegeben, wenn das Lichtauskoppelelement mit geringem Abstand zu dem Lichtleiter beweglich angeordnet ist. Hierdurch kann ein möglicher Reibungswiderstand wirkungsvoll verhindert und eine dadurch bedingte fehlerbehaftete Messwerterfassung ausgeschlossen werden. Zugleich werden dabei Verschleißerscheinungen vermieden.

Mögliche Abweichungen bei der Positionsbestimmung des Bewegungsgliedes können wirkungsvoll auch dadurch verhindert werden, dass der Lichtleiter eine Abdeckung zum Schutz gegen Fremdlichteinfall hat. Zusätzliche Schutzmaßnahmen gegen unerwünschte Lichteinstrahlung sind daher nicht erforderlich, so dass die Verwendung des Sensors auch bei großer Umgebungshelligkeit problemlos möglich ist.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigt jeweils in einer perspektivischen Ansicht in
- Fig. 1: einen erfindungsgemäßen optischen Sensor für ein um eine Achse schwenkbares Bewegungsglied,
- Fig.2: einen weiteren optischen Sensor für ein translatorisch verschiebbares Bewegungsglied.

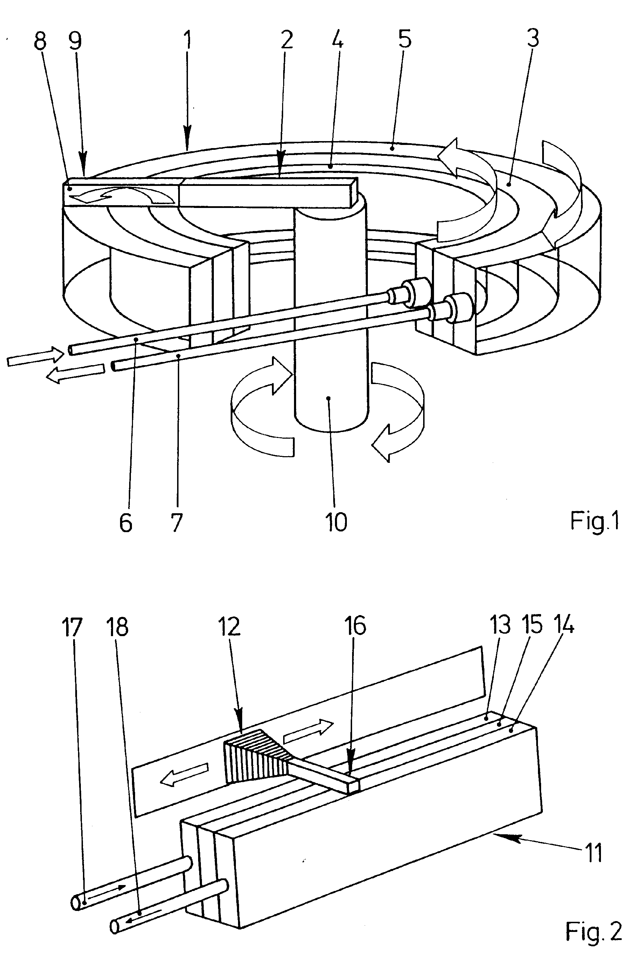

Figur 1 zeigt in einer perspektivischen Ansicht einen optischen Sensor 1 und ein Bewegungsglied 2. Der Sensor 1 umfasst zwei kreisringförmige, konzentrische und durch eine Trennschicht 3 optisch gegeneinander isolierte Lichtleiter 4, 5, welche jeweils mit einem Lichtwellenleiter 6, 7 verbunden sind. Mittels des Lichtwellenleiters 6 ist der Lichtleiter 4 mit einer nicht dargestellten Lichtquelle verbunden, die dadurch in den Lichtleiter 4 einstrahlt. Demgegenüber ist der Lichtleiter 5 mittels des Lichtwellenleiters 7 mit einem ebenfalls nicht dargestellten Lichtdetektor verbunden. Ein mit einem Prisma 8 versehenes Lichtauskoppelelement 9 dient dabei der Übertragung des in den ersten Lichtleiter 4 einstrahlenden Lichtes auf den zweiten Lichtleiter 5. Die beiden Lichtleiter 4, 5 sind mittels nicht dargestellter Farbpartikel mit einer Lichtdämpfung behaftet, so dass die jeweilige Position des beweglich angeordneten Lichtauskoppelelementes 9 aufgrund der von dem Lichtdetektor erfassten Lichtdämpfung bestimmt werden kann. Hierdurch ist zugleich auch die Position des das Lichtauskoppelelement 9 tragenden und um eine Achse 10 schwenkbar angeordneten Bewegungsgliedes 2 bestimmt.

Figur 2 zeigt in einer perspektivischen Darstellung einen optischen Sensor 11 zur Positionsbestimmung eines translatorisch verschiebbaren Bewegungsgliedes 12. Hierzu weist der Sensor 11 zwei parallele Lichtleiter 13, 14 auf, die mittels einer Trennschicht 15 gegeneinander optisch isoliert sind. Das Bewegungsglied 12 trägt vorderseitig ein Lichtauskoppelelement 16, welches das Licht des ersten Lichtleiters 13 auf den zweiten Lichtleiter 14 überträgt. Hierzu ist der erste Lichtleiter 13 mittels eines Lichtwellenleiters 17 mit einer nicht dargestellten Lichtquelle und der zweite Lichtleiter 14 mittels eines weiteren Lichtwellenleiters 18 mit einem ebenfalls nicht dargestellten Lichtdetektor verbunden. Die Lichtleiter 13, 14 bewirken aufgrund nicht dargestellter, die Transmission reduzierende Zusätze eine Lichtdämpfung, deren Wert die Bestimmung der Position des Lichtauskoppelelementes 16 und so zugleich des Bewegungsgliedes 12 ermöglicht. Die Positionsbestimmung kann dabei berührungslos erfolgen, wobei die Anordnung elektrischer Bauteile, insbesondere der Lichtquelle und des Lichtdetektors, außerhalb des Bewegungsbereiches des Bewegungsgliedes 12 erfolgen kann, so dass der Einsatz des Sensors 11 auch in einem aggressiven oder störanfälligen Umfeld problemlos möglich ist.

## Patentansprüche

1. Messverfahren zur optischen Positionsbestimmung eines Bewegungsgliedes, insbesondere in einem Kraftfahrzeug, mittels einer Lichtquelle und eines Lichtdetektors, bei dem die Charakteristik des von der Lichtquelle abgestrahlten Lichtes durch die unterschiedliche Position des Bewegungsgliedes verändert, mittels des Lichtdetektors erfasst und daraus die Position des Bewegungsgliedes errechnet wird, **dadurch gekennzeichnet,** dass das Licht in eine entsprechend der Position des Bewegungsgliedes veränderliche Messstrecke eingeleitet wird, wobei eine durch die Messstrecke verursachte Lichtdämpfung des Lichtes mittels des Lichtdetektors erfasst und aus der Lichtdämpfung mittels einer Recheneinheit auf die Position des Bewegungsgliedes geschlossen wird.

2. Messverfahren nach Anspruch 1, **dadurch gekennzeichnet,** dass das Licht zunächst in einen Lichtleiter eingeleitet, dann entsprechend der Position des Bewegungsgliedes ausgekoppelt und schließlich dem Lichtdetektor zugeführt wird.

3. Messverfahren nach Anspruch 1 oder 2, **dadurch gekennzeichnet,** dass zur optischen Positionsbestimmung das von der Lichtquelle abgestrahlte Licht und das von dem Lichtdetektor erfasste Licht miteinander verglichen wird und aus dem Differenzwert die Position des Bewegungsgliedes bestimmt wird.

4. Messverfahren nach zumindest einem der vorhergehenden Ansprüche, **dadurch gekennzeichnet,** dass die Lichtdämpfung aus der Abweichung der Helligkeit und des Farbspektrums des von der Lichtquelle abgestrahlten und des von dem Lichtdetektor erfassten Lichtes voneinander bestimmt wird.

5. Optischer Sensor zur Positionsbestimmung des Bewegungsgliedes mittels der Lichtquelle und des Lichtdetektors nach zumindest einem der vorhergehenden Ansprüche, **gekennzeichnet durch** einen die Lichtdämpfung bewirkenden, mittels der Lichtquelle beleuchtbaren Lichtleiter (4, 13) und ein entsprechend der Stellposition des Bewegungsgliedes (2, 12) bewegliches Lichtauskoppelelement (9, 16) zur Übertragung des Lichtes auf den Lichtdetektor.

6. Optischer Sensor nach Anspruch 5, **dadurch gekennzeichnet,** dass der Lichtleiter (4) zur Positionsbestimmung des um eine Achse (10) auslenkbaren Bewegungsgliedes (2) eine kreisring- oder bogenförmige Formgebung aufweist.

7. Optischer Sensor nach den Ansprüchen 5 oder 6, **dadurch gekennzeichnet,** dass das Lichtauskoppelelement (9, 16) zur Übertragung des Lichtes von dem ersten Lichtleiter (4, 13) auf einen zweiten, der Rückleitung des Lichtes zu dem Lichtdetektor dienenden Lichtleiter (5, 14) ausgeführt ist.

8. Optischer Sensor nach Anspruch 7, **dadurch gekennzeichnet,** dass die beiden Lichtleiter (4 und 5, 13 und 14) eine im Wesentlichen gemeinsame Baueinheit bilden, wobei die Lichtleiter (4 und 5, 13 und 14) voneinander optisch getrennt angeordnet sind.

9. Optischer Sensor nach zumindest einem der Ansprüche 5 bis 8, **dadurch gekennzeichnet,** dass die Lichtleiter (4, 5) durch das Lichtauskoppelelement (9) zur Bestimmung der Position des ersten Bewegungsgliedes (2) miteinander verbunden sind.

10. Optischer Sensor nach zumindest einem der Ansprüche 5 bis 9, **dadurch gekennzeichnet,** dass das Lichtauskoppelelement (9, 16) eine Spiegelfläche hat.

11. Optischer Sensor nach zumindest einem der Ansprüche 5 bis 10, **dadurch gekennzeichnet,** dass das Lichtauskoppelelement (9, 16) ein Prisma (8) hat.

12. Optischer Sensor nach zumindest einem der Ansprüche 5 bis 11, **dadurch gekennzeichnet,** dass der Lichtleiter (4, 5, 13, 14) zur Lichtdämpfung eingelagerte, eine eingeschränkte Transmission aufweisende Zusätze aufweist.

13. Optischer Sensor nach Anspruch 12, **dadurch gekennzeichnet,** dass die Zusätze mit Farbpartikeln versehen sind.

14. Optischer Sensor nach zumindest einem der Ansprüche 5 bis 13, **dadurch gekennzeichnet,** dass der Lichtleiter (4, 5, 13, 14) an zumindest einer Außenfläche eine geeignete Oberflächenbeschaffenheit aufweist, an der zur Lichtdämpfung ein Anteil des von der Lichtquelle in den Lichtleiter (4, 13) einstrahlenden Lichtes austritt.

15. Optischer Sensor nach zumindest einem der Ansprüche 5 bis 14, **dadurch gekennzeichnet,** dass das Lichtauskoppelelement (9, 16) mit geringem Abstand zu dem Lichtleiter (4, 5, 13, 14) beweglich angeordnet ist.

16. Optischer Sensor nach zumindest einem der Ansprüche 5 bis 15, **dadurch gekennzeichnet,** dass der Lichtleiter (4, 5, 13, 14) eine Abdeckung zum Schutz gegen Fremdlichteinfall hat.
